# EUROPÄISCHE PATENTSCHRIFT

(11) **EP 2 756 750 B1**
(45) Veröffentlichungstag und Bekanntmachung des Hinweises auf die Patenterteilung: **19.10.2016**
(21) Anmeldenummer: 14151413.3
(22) Anmeldetag: 16.01.2014
(51) Int. Cl.: A01K 27/00, B65H 75/14, B65H 75/44

(54) **Tierhalteeinrichtung mit einer Rasteinrichtung zum Befestigen eines Deckels an einer Rolle**
Animal restraining device with a latching device for securing a cover to a roller
Dispositif de retenue d'animal doté d'un dispositif d'arrêt pour la fixation d'un couvercle à un rouleau

(30) Priorität: 16.01.2013 DE 202013000382 U
(43) Veröffentlichungstag der Anmeldung: 23.07.2014
(73) Patentinhaber: Flexi-Bogdahn Technik GmbH & Co. KG, 22941 Bargteheide (DE)
(72) Erfinder: Wett, Thomas, 22145 Hamburg (DE)
(74) Vertreter: Tappe, Udo

(56) Entgegenhaltungen:
- WO-A1-2012/077474
- DE-U1- 9 005 113
- GB-A- 2 079 247
- JP-A- S5 398 074
- US-A- 5 238 105

## Beschreibung

Die Erfindung betrifft eine Tierhalteeinrichtung mit einer Rolleinrichtung zum Aufrollen und Abrollen eines flexiblen Strangelementes mit einer Rolle zum Aufnehmen des Strangelementes auf einer Außenumfangsfläche und mit einem Deckel zum Verschließen eines Innenraumes der Rolle, wobei der Deckel und die Rolle mittels einer Rasteinrichtung miteinander verbindbar sind, wobei der Deckel mindestens einen Rasthaken aufweist, der zum Herstellen einer Rastverbindung des Deckels mit der Rolle mit einer Rastaufnahme der Rolle verrastbar ist.

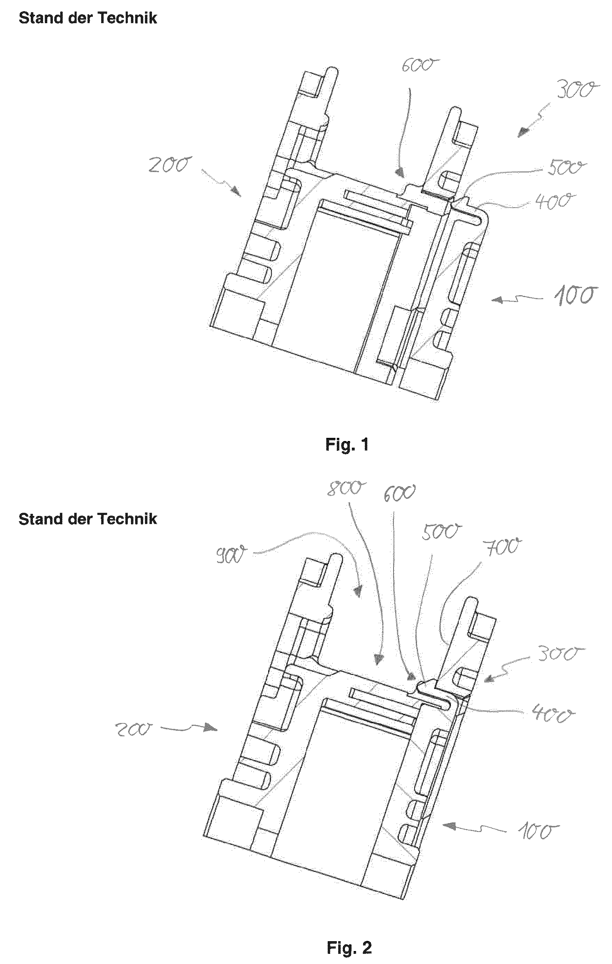

Eine bekannte Rasteinrichtung ist gemäß den anliegenden Figuren 1 und 2 gezeigt. Bei einer solchen Rasteinrichtung ragt der Rasthaken des Deckels im Bereich einer Wickelfläche der Rolle in einen Wickelraum der Rolle hinein. Wird ein flexibles Strangelement, beispielsweise eine Leine, auf die Rolle und in dem Wickelraum aufgerollt, drückt das Strangelement auch auf den Rasthaken. Hierbei besteht die Gefahr, dass der Rasthaken verbogen wird, hierdurch aus der Rastaufnahme rutschen kann und somit die Rastverbindung unerwünscht gelöst wird. Zudem ist von Nachteil, dass der in den Wickelraum ragende Rasthaken die nutzbare Breite des Wickelraumes einschränkt, so dass die Verwendung eines Gurtes als ein flexibles Strangelement nicht realisierbar ist.

Aus der JP S 53 98074 A ist eine Kabelrolle bekannt, bei der ein Deckel mit einer Rasteinrichtung befestigbar ist. Hierzu weist der Deckel einen Rasthaken auf, der zum Herstellen einer Rastverbindung des Deckels mit einer Rolle mit einer Rastaufnahme der Rolle verrastbar ist. Die WO 2012/077474 A1 betrifft eine Tierhalteeinrichtung, wobei innerhalb eines Zentrums der Rolle eine Achsaufnahme verrastbar ist. Der DE 90 05 113 U1 ist eine Rolle zum Aufwickeln eines Wasserschlauches zu entnehmen. Die US 5,238,105 A zeigt ebenfalls eine Rolle zum Aufwickeln von Bewässerungsschläuchen, bei der ein Deckel auf die Hohlnabe der Rolle mittels einer Rastverbindung aufsetzbar ist.

Es ist die der Erfindung zugrunde liegende Aufgabe, eine Rasteinrichtung einer Tierhalteeinrichtung der eingangs genannten Art derart weiterzuentwickeln, dass ein unerwünschtes Lösen der Rastverbindung vermieden und/oder die Verwendbarkeit der Rasteinrichtung verbessert ist.

Zur Lösung der der Erfindung zugrunde liegenden Aufgabe ist die Rasteinrichtung einer Tierhalteeinrichtung der eingangs genannten Art dadurch gekennzeichnet, dass zum Herstellen der Rastverbindung der Rasthaken mindestens teilweise in die Rastaufnahme radial von außen nach innen eingreift, wobei die Verbindung des Rasthakens mit der Rastaufnahme bei einem um die Rolle mindestens teilweise aufgewickelten flexiblen Strangelement, das auf dem Rasthaken zu liegen kommt, zusätzlich gesichert wird, und die Rastaufnahme im Bereich der Außenumfangsfläche angeordnet ist, wobei die Außenumfangsfläche im Bereich der Rastaufnahme eine radial nach innen gerichtete Vertiefung zum mindestens teilweisen Aufnehmen eines Rastkopfes des Rasthakens aufweist, und das mindestens teilweise aufgewickelte Strangelement den Rastkopf des Rasthakens radial nach innen in Richtung der Außenumfangsfläche bzw. der Vertiefung drückt..

Hierbei ist von Vorteil, dass die Verbindung des Rasthakens mit der Rastaufnahme bei einem um die Rolle mindestens teilweise aufgewickelten flexiblen Strangelement, das auf dem Rasthaken zu liegen kommt, zusätzlich gesichert wird. Insbesondere drückt das aufgewickelte Strangelement den Rasthaken radial von außen nach innen. Hierdurch wird ein ungewünschtes Lösen der Rastverbindung zuverlässig vermieden. Insbesondere ist zum Lösen der Rastverbindung ein Verbiegen des Rasthakens in eine Richtung, insbesondere in Bezug zur Rolle, radial von innen nach außen notwendig. Der Rasthaken kann die Rastaufnahme mindestens teilweise radial von außen nach innen hintergreifen und/oder umgreifen. Insbesondere greift der Rasthaken in der Rastverbindung mindestens teilweise in die Rastaufnahme ein. Vorzugsweise hat die Rolle eine Drehachse, um die die Rolle drehbar ist. Somit ergibt sich die radial von außen nach innen gerichtete Eingreifrichtung des Rasthakens in einer Richtung quer, insbesondere rechtwinklig, zu der Drehachse der Rolle. Das flexible Strangelement kann eine Leine, insbesondere ein Gurt, ein Band, eine Kette und/oder ein Seil sein. Vorzugsweise ist der Deckel zum Abdecken und/oder Verschließen eines, insbesondere zylinderförmigen Innenraumes, der Rolle vorgesehen. Innerhalb des Innenraumes kann ein Spannelement, insbesondere eine Rückholfeder, angeordnet sein.

Der Rasthaken weist einen Rastkopf auf. Nach einer weiteren Ausführungsform weist die Rastaufnahme einen Rastanschlag auf, wobei vorzugsweise der Rastkopf den Rastanschlag in der Rastverbindung mindestens teilweise hintergreift. Der Rastkopf kann als ein, insbesondere in der Rastverbindung sich radial nach innen erstreckender, Vorsprung oder ein Steg ausgebildet sein. Der Steg kann zwischen zwei Schenkeln angeordnet sein und/oder zwei im Wesentlichen parallel zueinander verlaufende Schenkel werden mittels des quer, insbesondere rechtwinklig, zu den Schenkeln verlaufenden Stegs miteinander verbunden. Der Rasthaken kann als eine Rastschlaufe ausgebildet sein, die den Rastanschlag umgreift. Vorzugsweise liegt eine Außenfläche des Rastkopfes mindestens teilweise an einer Innenfläche des Rastanschlages an. Vorzugsweise ist die Außenfläche des Rastkopfes dem Deckel zugewandt und/oder die Innenfläche des Rastanschlages von dem Deckel abgewandt.

Gemäß einer Weiterbildung ist der Rastanschlag vorsprungartig, insbesondere in Bezug auf die Rolle und/oder Drehachse, radial nach außen gerichtet. Hierdurch ist ein radial von außen nach innen gerichtetes Hintergreifen, Umgreifen und/oder Eingreifen des Rastanschlages mittels des Rasthakens, insbesondere des Rastkopfes und/oder der Rastschlaufe, verbessert. Vorzugsweise weist der Rastanschlag eine erste Rampe auf. Mittels der Rampe kann das Einführen des Rasthakens in die Rastaufnahme erleichtert sein. Vorzugsweise ist die erste Rampe an einer, insbesondere in Bezug zur Rolle und/oder Drehachse, radial nach außen gerichteten Seite des Rastanschlages angeordnet. Die erste Rampe kann eine zu einer Außenseite der Rolle, insbesondere in Richtung des Deckels, hin abfallende Neigung haben. Vorzugsweise wird der Rasthaken beim Einführen in die Rastaufnahme radial nach außen verbogen, wobei der Rastkopf über die Rampe in die Rastverbindung gleitet, in dem der Rasthaken nach dem Gleiten über die Rampe wieder in seine Ausgangsposition zurückkehrt und hierbei den Rastanschlag hintergreift und/oder umgreift. Vorzugsweise ist der Rasthaken elastisch ausgebildet.

Vorzugsweise hat der Rastkopf eine zweite Rampe. Die zweite Rampe kann an einer, insbesondere in Bezug zur Rolle und/oder Drehachse, radial nach innen gerichteten Seite des Rastkopfes angeordnet sein. Insbesondere hat die zweite Rampe eine zu der ersten Rampe korrespondierend ausgebildete Neigung zum Erleichtern des Einschiebens des Rasthakens in die Rastaufnahme. Hierdurch wird das Befestigen des Deckels an der Rolle weiter erleichtert. Vorzugsweise erfolgt die Befestigung des Deckels an der Rolle manuell und/oder werkzeuglos.

Nach einer weiteren Ausführungsform ist der Deckel mit der Rolle und/oder der Rasthaken mit der Rastaufnahme aufgrund einer Einsteckbewegung des Deckels und/oder des Rasthakens quer, insbesondere rechtwinklig, zur Ebene des Deckels und/oder zur radialen Ausrichtung der Rolle verrastbar. Insbesondere erfolgt die Einsteckbewegung in Längsrichtung der Drehachse der Rolle. Vorzugsweise ist der Deckel scheibenförmig und/oder als eine Scheibe ausgebildet. Insbesondere ist der Deckel koaxial zur Drehachse der Rolle mit der Rolle verbindbar. Der Rasthaken kann stegartig und/oder U-förmig ausgebildet sein. Der Rasthaken kann eine Rastschlaufe bilden, die die Rastaufnahme in der Rastverbindung umgreift. Vorzugsweise erstreckt sich der Rasthaken quer, insbesondere rechtwinklig, zur Ebene des Deckels. Vorzugsweise ist der Rasthaken an einem Außenumfang des Deckels angeordnet und/oder der Rasthaken erstreckt sich von der Ebene des Deckels in eine Richtung von der Außenseite des Deckels weg.

Die Rolle hat eine Außenumfangsfläche, insbesondere eine Wickelfläche und/oder einen Wickelraum, zum Aufwickeln eines flexiblen Strangelementes, insbesondere einer Leine. Vorzugsweise ist die Außenumfangsfläche kreisförmig. Die Rastaufnahme ist im Bereich der Außenumfangsfläche angeordnet. Die Außenumfangsfläche weist im Bereich der Rastaufnahme eine radial nach innen gerichtete Vertiefung zum mindestens teilweisen Aufnehmen des Rastkopfes auf. Insbesondere wird der Rastkopf in der Rastverbindung derart in der Vertiefung aufgenommen, dass der Rastkopf bündig mit der Außenumfangsfläche abschließt. Hierdurch ist die Aufwicklung eines Gurtes ermöglicht, der vorzugsweise eine Breite hat, die im Wesentlichen der Breite der Außenumfangsfläche und/oder des Wickelraumes entspricht.

Vorzugsweise ist die Außenumfangsfläche zum Bilden eines Wickelraumes mittels zweier sich, insbesondere in Bezug zur Rolle und/oder Drehachse, radial nach außen erstreckender und voneinander beabstandeter ringförmiger Stege begrenzt. Hierbei kann der Abstand der Stege durch die Breite der Außenumfangsfläche und/oder Breite der Rolle vorgegeben sein. Vorzugsweise ist die Rastaufnahme einem ringförmigen Steg zugeordnet. Die Rastaufnahme kann einen Durchbruch zum mindestens teilweisen Durchführen des Rasthakens aufweisen. Insbesondere ist der Durchbruch dem Steg zugeordnet, dem auch die Rastaufnahme zugeordnet ist.

Nach einer weiteren Ausführungsform hat die Rolle ein Zylinderelement, das eine Außenumfangsfläche und einen, insbesondere zylinderförmigen, Innenraum aufweist, der mittels des Deckels, insbesondere einer Scheibe, verschließbar ist. Vorzugsweise ist das Zylinderelement koaxial zu einer Drehachse der Rolle ausgerichtet. Es können ein, zwei, drei, vier oder mehr, insbesondere gleichmäßige um den Außenumfang des Deckels verteilte, Rastverbindung vorgesehen sein, um den Deckel mit der Rolle zu verbinden. Vorzugsweise schließt der Deckel in der Rastverbindung bündig mit der Außenseite der Rolle ab.

Von besonderem Vorteil ist eine Rolleinrichtung zum Aufrollen und Abrollen eines flexiblen Strangelementes mit einer Rolle zum Aufnehmen des Strangelementes auf einer Außenumfangsfläche und mit einem Deckel, insbesondere einer Scheibe, zum Verschließen eines Innenraumes der Rolle, wobei der Deckel und die Rolle mittels einer erfindungsgemäßen Rasteinrichtung miteinander verbindbar sind. Die Rolleinrichtung kann Betätigungselemente zum manuellen und/oder selbsttätigen Aufrollen und/oder Abrollen des Strangelementes aufweisen.

Vorzugsweise ist eine Tierhalteeinrichtung zum Halten eines Tieres an einer Leine mit einer solchen Rolleinrichtung bzw. der erfindungsgemäßen Rasteinrichtung zum Aufrollen und Abrollen der Leine vorgesehen. Hierbei kann die Rolleinrichtung eine Rolle zum Aufnehmen der Leine auf einer Wickelfläche der Rolle und/oder in einem Wickelraum der Rolle aufweisen. Weiter kann die Rolleinrichtung einen Deckel, insbesondere eine Scheibe, zum Verschließen eines zylinderartigen Innenraumes der Rolle zum Aufnehmen einer Rückholfeder haben. Vorzugsweise wird die Rückholfeder beim Abwickeln der Leine gespannt, so dass ein selbsttätiges Aufwickeln der Leine realisierbar ist.

Nachfolgend wird die Erfindung anhand der Figuren näher erläutert. Es zeigen:
- Fig. 1: eine geschnittene Seitenansicht eines Ausschnittes eines Deckels und einer Rolle vor dem Herstellen einer Rastverbindung mit einer Rasteinrichtung nach dem Stand der Technik,
- Fig. 2: eine geschnittene Seitenansicht eines Ausschnittes eines Deckels und einer Rolle mit einer hergestellten Rastverbindung mit einer Rasteinrichtung nach dem Stand der Technik,
- Fig. 3: eine perspektivische Seitenansicht eines Deckels mit einer Rolle vor dem Herstellen einer Rastverbindung mit einer erfindungsgemäßen Rasteinrichtung,
- Fig. 4: eine perspektivische Seitenansicht eines Deckels mit einer Rolle mit einer hergestellten Rastverbindung mit einer erfindungsgemäßen Rasteinrichtung,
- Fig. 5: eine geschnittene Seitenansicht einer erfindungsgemäßen Rasteinrichtung vor dem Herstellen der Rastverbindung,
- Fig. 6: eine geschnittene Seitenansicht einer erfindungsgemäßen Rasteinrichtung mit einer hergestellten Rastverbindung,
- Fig. 7: eine perspektivische Seitenansicht eines Rasthakens für eine erfindungsgemäße Rasteinrichtung,
- Fig. 8: eine perspektivische Seitenansicht einer Rastaufnahme für eine erfindungsgemäße Rasteinrichtung, und
- Fig. 9: eine perspektivische Seitenansicht einer erfindungsgemäßen Rasteinrichtung.

Fig. 1 zeigt eine geschnittene Seitenansicht eines Ausschnittes eines Deckels 100 und einer Rolle 200 vor dem Herstellen einer Rastverbindung mit einer Rasteinrichtung 300 nach dem Stand der Technik. Die Rasteinrichtung 300 umfasst einen Rasthaken 400. Der Rasthaken 400 ist dem Deckel 100 zugeordnet. Der Rasthaken 400 hat einen Rastkopf 500, der sich in Bezug zur Ebene des Deckels 100 bzw. radial zur Rolle 200 bzw. zur Drehachse der Rolle 200 nach außen gerichtet ist. Des Weiteren umfasst die Rasteinrichtung 300 eine Rastaufnahme 600, die der Rolle 200 zugeordnet ist.

Zum Herstellen der Rastverbindung wird der Deckel 100 in eine korrespondierend zu dem Deckel 100 ausgebildete Aussparung der Rolle 200 eingesteckt, wobei der Rasthaken 400 in die Rastaufnahme 600 eingeführt wird.

Fig. 2 ist eine geschnittene Seitenansicht eines Ausschnittes des Deckels 100 und der Rolle 200 mit einer hergestellten Rastverbindung mit der Rasteinrichtung 300 nach dem Stand der Technik zu entnehmen. Der Rastkopf 500 hintergreift die Rastaufnahme 600 im Bereich einer Innenwand 700 in Bezug zur Rolle 200 radial von innen nach außen.

Wird die Rolle 200 zum Aufwickeln eines hier nicht näher dargestellten flexiblen Strangelementes genutzt, in dem das Strangelement auf der Außenumfangsfläche 800 und innerhalb des Wickelraumes 900 aufgewickelt wird, besteht die Gefahr, dass das aufgewickelte Strangelement auf den Rastkopf 500 radial nach innen drückt. Hierdurch besteht das Risiko, dass der Rastkopf 500 derart aus seiner Lage radial nach innen gedrückt wird, dass dieser nicht mehr an der Innenwand 700 anliegt und der Deckel 100 unbeabsichtigt von der Rolle 200 gelöst wird.

Dieser Nachteil wird, wie anhand der folgenden Figuren dargestellt, mittels der erfindungsgemäßen Rasteinrichtung vermieden.

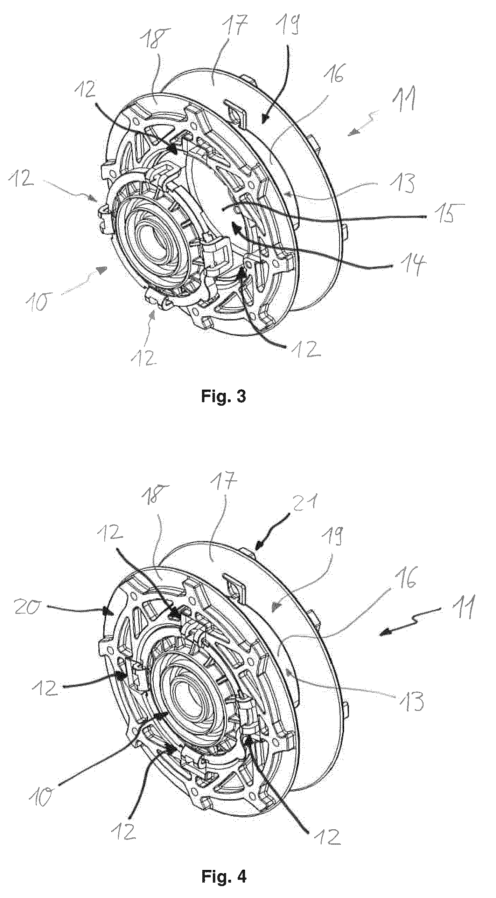

Fig. 3 zeigt eine perspektivische Seitenansicht eines Deckels 10 mit einer Rolle 11 vor dem Herstellen einer Rastverbindung mit einer erfindungsgemäßen Rasteinrichtung 12. Bei diesem Ausführungsbeispiel sind der Deckel 10 und die Rolle 11 Bestandteil einer hier nicht näher dargestellten Rolleinrichtung für eine Tierhalteeinrichtung zum Halten eines Tieres an einer Leine.

Die Rolle 11 hat ein Zylinderelement 13 mit einem zylinderförmigen Innenraum 14. Ein erstes Ende des Innenraumes 14 ist mittels einer Abdeckung 15 verschlossen. Ein von dem ersten Ende abgewandtes zweites Ende des Innenraumes 14 ist mittels des Deckels 10 verschließbar. Der Innenraum 14 ist zur Aufnahme einer hier nicht näher dargestellten Rückholfeder, beispielsweise einer Spiralfeder, ausgebildet. Des Weiteren hat die Rolle 11 eine Außenumfangsfläche 16, die bei diesem Ausführungsbeispiel als Wickelfläche und zur Aufnahme eines hier nicht näher dargestellten flexiblen Strangelementes bzw. einer Leine dient. Von der Außenumfangsfläche 16 erstrecken sich ringförmige Stege 17, 18 radial nach außen. Hierbei ist der Steg 17 dem ersten Ende des Zylinderelementes 13 und der Steg 18 dem von dem ersten Ende abgewandten zweiten Ende des Zylinderelementes 13 zugeordnet. Die Stege 17, 18 und die Außenumfangsfläche 16 bilden einen im Wesentlichen U-förmigen Wickelraum 19 zum Aufnehmen des Strangelementes bzw. der Leine.

Der Deckel 10 ist bei diesem Ausführungsbeispiel im Wesentlichen als eine Scheibe ausgebildet und hat einen Außendurchmesser, der im Wesentlichen dem Innendurchmesser des Innenraumes 14 entspricht. Lediglich Rasthaken der Rasteinrichtungen 12 stehen, wie nachfolgend noch näher erläutert wird, über diesen Außendurchmesser des Deckels 10 hinaus. Hier sind beispielhaft insgesamt vier Rasteinrichtungen gleichmäßig um den Außenumfang des Deckels 10 verteilt. Alternativ sind weniger oder mehr Rasteinrichtungen einsetzbar.

Fig. 4 ist eine perspektivische Seitenansicht des Deckels 10 mit der Rolle 11 mit einer hergestellten Rastverbindung mit den erfindungsgemäßen Rasteinrichtungen 12 zu entnehmen. Hierzu ist der Deckel 10 in das zweite Ende des Zylinderelementes 13 eingesteckt, wobei zugleich die Rastverbindung des Deckels 10 mit der Rolle 11 mittels der Rasteinrichtungen 12 hergestellt ist. Diese Rastverbindung ist durch manuelles Einstecken des Deckels 10 in das Zylinderelement 13 und somit werkzeuglos herstellbar.

In der Rastverbindung schließt die Außenseite des Deckels 10 im Wesentlichen bündig mit der Außenseite der Rolle 11 bzw. des Stegs 18 ab. Die beiden von einander abgewandten Außenseiten der Rolle 11 bzw. der Stege 17, 18 weisen bei diesem Ausführungsbeispiel Kulissen 20, 21 auf. Die Kulissen 20, 21 dienen zum Realisieren einer Bremseinrichtung bei einer Tierhalteeinrichtung.

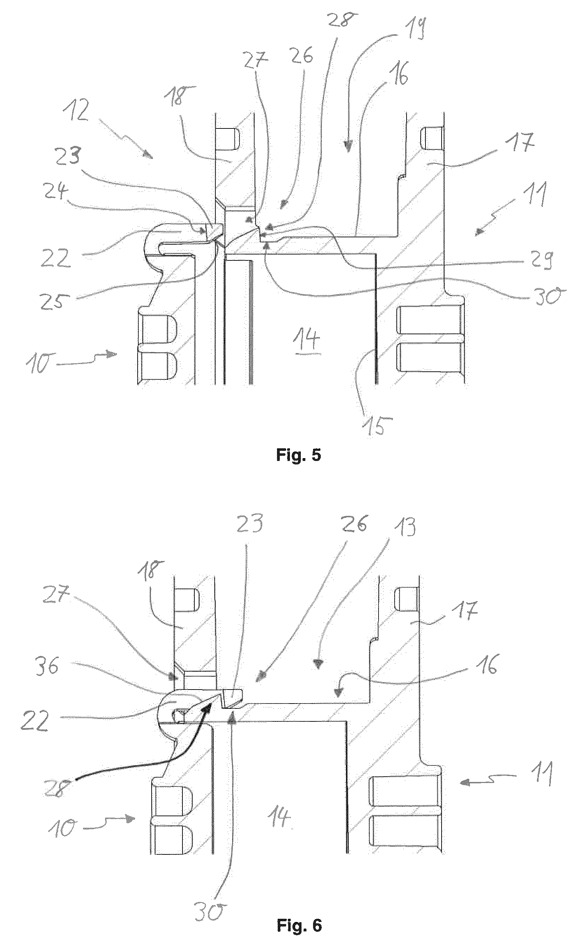

Fig. 5 zeigt eine geschnittene Seitenansicht einer erfindungsgemäßen Rasteinrichtung 12 vor dem Herstellen der Rastverbindung. Bei diesem Ausführungsbeispiel ist die Abdeckung 15 einstückig mit der Rolle 11 ausgebildet.

Die Rastverbindung 12 umfasst einen Rasthaken 22, der dem Deckel 12 zugeordnet ist und am Außenumfang des Deckels 12 angeordnet ist. Der Rasthaken 12 erstreckt sich über die Tiefe oder Dicke des Deckels 10 hinaus quer, hier rechtwinklig, zur Ebene des Deckels 10 in Richtung der Rolle 11. An seinem äußeren Ende hat der Rasthaken 22 einen Rastkopf 23. Bei diesem Ausführungsbeispiel ist der Rastkopf 23 stegartig ausgebildet. Der Rastkopf 23 hat eine Außenfläche 24, die im Wesentlichen dem Deckel 10 zugewandt ist. Des Weiteren hat der Rastkopf 23 eine Rampe 25. Die Rampe 25 ist an einer in Bezug auf den scheibenartigen Deckel 10 radial nach innen gerichteten Seite des Rastkopfes 23 angeordnet. Hierbei weist die Rampe 25 eine derartige Neigung auf, dass sich der Rastkopf 23 rechtwinklig zur Ebene des Deckels 10 und in Richtung von dem Deckel 10 weg verjüngt.

Weiter umfasst die Rasteinrichtung 12 eine Rastaufnahme 26, die der Rolle 11 zugeordnet ist. Die Rastaufnahme 26 hat einen Durchbruch 27, der den Steg 18 zum Durchführen des Rastkopfes 23 durchbricht. Weiter hat die Rastaufnahme 26 einen Rastanschlag 28. Der Rastanschlag 28 erhebt sich vorsprungartig an einer Innenseite des Stegs 18 im Bereich des Durchbruches 27. Der Rastanschlag 28 befindet sich im Wesentlichen auf Höhe der Außenumfangsfläche 16. Der Rastanschlag 28 hat eine Innenfläche 29, die dem Wickelraum 19 zugewandt ist. Des Weiteren umfasst die Rastaufnahme 26 eine Vertiefung 30. Die Vertiefung 30 ist als eine Einsenkung in die Außenumfangsfläche 16 im Bereich des Rastanschlags 28 zum mindestens teilweisen Aufnehmen des Rastkopfes 23 ausgebildet.

Fig. 6 ist eine geschnittene Seitenansicht der erfindungsgemäßen Rasteinrichtung 12 mit einer hergestellten Rastverbindung zu entnehmen. In der Rastverbindung ist der Rasthaken 22 in den Durchbruch 27 eingeführt. Der Rastkopf 23 ist vollständig durch den Durchbruch 27 und rechtwinklig zur Ebene des Deckels 10 bzw. des Stegs 18 und in Längsrichtung der Drehachse der Rolle 11 hindurch geführt. Der Rastanschlag 28 hat eine Rampe 36, die an einer radial nach außen gerichteten Seite des Rastanschlages 28 angeordnet ist und nach außen in Richtung des Deckels 10 hin geneigt ist. Beim Einschieben des Deckels 10 in das zweite Ende des Zylinderelementes 13 rutscht die Rampe 25 des Rastkopfes 23 auf der Rampe 36 des Rastanschlages 28. Hierdurch wird der Rasthaken 22 und der Rastkopf 23 in Bezug zur Rolle 11 bzw. der Drehachse der Rolle 11 radial nach außen gebogen. In der Rastverbindung ist der Rastkopf 23 vollständig über die Rampe 36 hinweg geglitten. Der Rasthaken 22 und der Rastkopf 23 gelangen selbsttätig aufgrund einer elastischen Ausbildung und einer in Bezug zur Drehachse der Rolle 11 radial von außen nach innen gerichteten Bewegung in ihre Ausgangslage zurück, wodurch der Rastkopf 23 den Rastanschlag 28 hintergreift bzw. der Rasthaken 22 den Rastanschlag 28 umgreift. Somit hintergreift der Rastkopf 23 den Rastanschlag in Bezug zur Rolle 11 bzw. umgreift der Rasthaken 22 den Rastanschlag 28 radial von außen nach innen.

In der Rastverbindung liegt die Außenfläche 24 des Rastkopfes 23 an der Innenfläche 29 des Rastanschlages 28 an. Der Rastkopf 23 ist mindestens teilweise in der Vertiefung 30 aufgenommen.

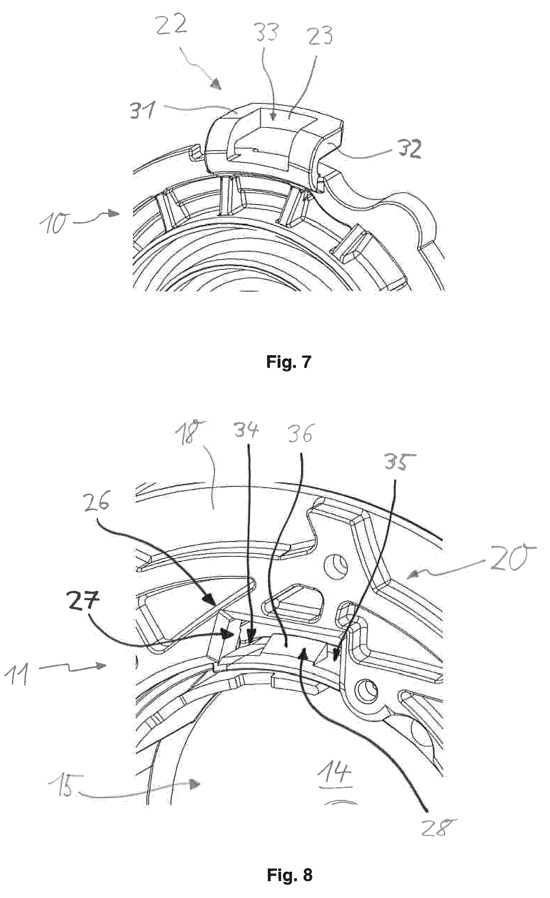

Fig. 7 zeigt eine perspektivische Seitenansicht eines Rasthakens 22 für eine erfindungsgemäße Rasteinrichtung 12. Bei diesem Ausführungsbeispiel hat der Rasthaken 22 eine im Wesentlichen U-förmige Ausbildung und ist als eine Rastschlaufe ausgebildet. Der Rasthaken 22 hat zwei Schenkel 31, 32, die parallel zueinander und rechtwinklig zur Ebene des Deckels 10 vom Außenumfang des Deckels 10 und von der Außenseite des Deckels 10 weg gerichtet sind. Die von der Außenseite des Deckels 10 abgewandten Enden der Schenkel 31, 32 sind mittels des Rastkopfes 23 einstückig miteinander verbunden. Mittels der Schenkel 31, 32 und dem Rastkopf 23 bildet bzw. definiert der Rasthaken 22 einen Rastraum 33.

Fig. 8 ist eine perspektivische Seitenansicht einer Rastaufnahme 26 für eine erfindungsgemäße Rasteinrichtung 12 zu entnehmen. In dieser Darstellung ist der Durchbruch 27 und der Rastanschlag 28 mit der Rampe 36 gut zu erkennen. Hierbei weist der Rastanschlag 28 eine geringere Breite als der Durchbruch 27 auf. Der Rastanschlag ist mittig innerhalb des Durchbruches 27 angeordnet. Seitlich neben dem Rastanschlag 28 sind Aussparrungen 34, 35 angeordnet, die zum Aufnehmen der Schenkel 31, 32 des Rasthakens 22 ausgebildet sind.

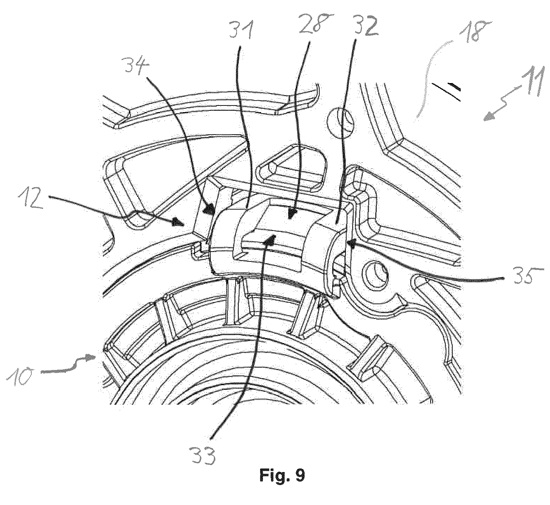

Fig. 9 zeigt eine perspektivische Seitenansicht einer erfindungsgemäßen Rasteinrichtung 12. Gemäß dieser Darstellung ist der Rasthaken 12 gemäß Fig. 7 mit der Rastaufnahme 26 gemäß Fig. 8 zum Herstellen der Rastverbindung verrastet. Der Rastkopf 23 hintergreift den Rastanschlag 28 in Bezug zur Rolle 11 radial von außen nach innen. Bei diesem Ausführungsbeispiel umgreift der als Rastschlaufe ausgebildete Rasthaken 22 den Rastanschlag 28 zum Herstellen der Rastverbindung radial von außen nach innen. Hierdurch ist eine sichere Positionierung des Deckels 10 hinsichtlich einer Verschiebung des Deckels in Axialrichtung der Rolle 11 gewährleistet. Zudem sind die Schenkel 31, 32 in die Aussparungen 34, 35 aufgenommen, wodurch eine Verdrehung des Deckels 10 um die Drehachse der Rolle 11 verhindert ist. Der Rastanschlag 28 ist korrespondierend zu dem Rastraum 33 ausgebildet und den Rastraum 33 im Wesentlichen ausfüllend in den Rastraum 33 des Rasthakens 22 aufgenommen. Somit liegen die einander zugewandten Seiten der Schenkel 31, 32 an Seitenflächen des Rastanschlages 28 an.

Wird ein flexibles Strangelement, beispielsweise eine Leine, in dem Wickelraum 19 und auf der Wickelfläche 16 aufgerollt, gelangt Leinenmaterial auch in den Bereich der Rasteinrichtung 12. Hierbei drückt die aufgewickelte Leine den Rastkopf 23 radial nach innen in Richtung der Wickelfläche 16 bzw. der Vertiefung 30. Hierdurch wird die Rasteinrichtung 12 zusätzlich gesichert. Ein ungewünschtes Lösen der Rastsicherung 12 ist somit zuverlässig verhindert.

### Bezugszeichenliste:

- 10: Deckel
- 11: Rolle
- 12: Rasteinrichtung
- 13: Zylinderelement
- 14: Innenraum
- 15: Abdeckung
- 16: Außenumfangsfläche
- 17: Steg
- 18: Steg
- 19: Wickelraum
- 20: Kulisse
- 21: Kulisse
- 22: Rasthaken
- 23: Rastkopf
- 24: Außenfläche
- 25: Rampe
- 26: Rastaufnahme
- 27: Durchbruch
- 28: Rastanschlag
- 29: Innenfläche
- 30: Vertiefung
- 31: Schenkel
- 32: Schenkel
- 33: Rastraum
- 34: Aussparung
- 35: Aussparung
- 36: Rampe

- 100: Deckel
- 200: Rolle
- 300: Rasteinrichtung
- 400: Rasthaken
- 500: Rastkopf
- 600: Rastaufnahme
- 700: Innenwand
- 800: Außenumfangsfläche
- 900: Wickelraum

## Patentansprüche

1. Tierhalteeinrichtung mit einer Rolleinrichtung zum Aufrollen und Abrollen eines flexiblen Strangelementes mit einer Rolle (11) zum Aufnehmen des Strangelementes auf einer Außenumfangsfläche (16) und mit einem Deckel (10) zum Verschließen eines Innenraumes (14) der Rolle (11), wobei der Deckel (10) und die Rolle (11) mittels einer Rasteinrichtung (12) miteinander verbindbar sind, wobei der Deckel (10) mindestens einen Rasthaken (22) aufweist, der zum Herstellen einer Rastverbindung des Deckels (10) mit der Rolle (11) mit einer Rastaufnahme (26) der Rolle (11) verrastbar ist, **dadurch gekennzeichnet, dass** zum Herstellen der Rastverbindung der Rasthaken (22) mindestens teilweise in die Rastaufnahme (26) radial von außen nach innen eingreift, wobei die Verbindung des Rasthakens (22) mit der Rastaufnahme (26) bei einem um die Rolle (11) mindestens teilweise aufgewickelten flexiblen Strangelement, das auf dem Rasthaken (22) zu liegen kommt, zusätzlich gesichert wird, und die Rastaufnahme (26) im Bereich der Außenumfangsfläche (16) angeordnet ist, wobei die Außenumfangsfläche (16) im Bereich der Rastaufnahme (26) eine radial nach innen gerichtete Vertiefung (30) zum mindestens teilweisen Aufnehmen eines Rastkopfes (23) des Rasthakens (22) aufweist, und das mindestens teilweise aufgewickelte Strangelement den Rastkopf (23) des Rasthakens (22) radial nach innen in Richtung der Außenumfangsfläche (16) bzw. der Vertiefung (30) drückt.

2. Tierhalteeinrichtung nach Anspruch 1, **dadurch gekennzeichnet, dass** das aufgewickelte Strangelement den Rasthaken (22) radial von außen nach innen drückt und/oder die Rastaufnahme (26) einen Rastanschlag (28) aufweist, wobei vorzugsweise der Rastkopf (23) den Rastanschlag (28) in der Rastverbindung mindestens teilweise hintergreift und/oder eine Außenfläche (24) des Rastkopfes (23) mindestens teilweise an einer Innenfläche (29) des Rastanschlages (28) anliegt.

3. Tierhalteeinrichtung nach Anspruch 2, **dadurch gekennzeichnet, dass** der Rastanschlag (28) vorsprungartig radial nach außen gerichtet ist, wobei vorzugsweise der Rastanschlag (28) eine erste Rampe (36) aufweist, wobei vorzugsweise die erste Rampe (36) an einer radial nach außen gerichteten Seite des Rastanschlages (28) angeordnet ist und/oder die erste Rampe (36) eine zu einer Außenseite der Rolle (11), insbesondere in Richtung des Deckels (10), hin abfallende Neigung hat.

4. Tierhalteeinrichtung nach einem der Ansprüche 2 oder 3, **dadurch gekennzeichnet, dass** der Rastkopf (23) eine zweite Rampe (25) hat, wobei vorzugsweise die zweite Rampe (25) an einer radial nach innen gerichtete Seite des Rastkopfes (23) angeordnet ist und/oder eine zu der ersten Rampe (36) korrespondierend ausgebildete Neigung zum Erleichtern des Einschiebens des Rasthakens (22) in die Rastaufnahme (26) hat.

5. Tierhalteeinrichtung nach einem der vorhergehenden Ansprüche, **dadurch gekennzeichnet, dass** der Deckel (10) mit der Rolle (11) und/oder der Rasthaken (22) mit der Rastaufnahme (26) aufgrund einer Einsteckbewegung des Deckels (10) und/oder des Rasthakens (22) quer, insbesondere rechtwinklig, zur Ebene des Deckels (10) und/oder zur radialen Ausrichtung der Rolle (11) verrastbar ist, wobei vorzugsweise der Rasthaken (22) stegartig und/oder U-förmig ausgebildet ist und sich quer, insbesondere rechtwinklig, zur Ebene des Deckels (10) erstreckt.

6. Tierhalteeinrichtung nach einem der vorhergehenden Ansprüche, **dadurch gekennzeichnet, dass** die Außenumfangsfläche (16) zum Bilden eines Wickelraumes (19) mittels zweier sich radial nach außen erstreckender und voneinander beabstandeter ringförmiger Stege (17, 18) begrenzt ist, wobei vorzugsweise die Rastaufnahme (26) einem ringförmigen Steg (18) zugeordnet ist und/oder einen Durchbruch (27) zum mindestens teilweisen Durchführen des Rasthakens (22) aufweist.

7. Tierhalteeinrichtung nach einem der vorhergehenden Ansprüche, **dadurch gekennzeichnet, dass** die Rolle (11) ein Zylinderelement (13) hat, das eine Außenumfangsfläche (16) und einen Innenraum (14) aufweist, der mittels des Deckels (10), insbesondere einer Scheibe, verschließbar ist, wobei vorzugsweise ein, zwei, drei, vier oder mehr, insbesondere gleichmäßige verteilte, Rastverbindung vorgesehen sind und/oder der Deckel (10) in der Rastverbindung bündig mit der Außenseite der Rolle (11) abschließt.

## Claims

1. Animal restraining device with a roller unit for rolling up and unrolling a flexible strand element with a roller (11) for taking up the strand element on an outer peripheral surface (16) and with a cover (10) to close an interior space (14) of the roller (11), wherein the cover (10) and the roller (11) are connectable with one another by means of a latching device (12), wherein the cover (10) possesses at least one latching hook (22) that is lockable with a latch receiver (26) of the roller (11) so as to produce a latching connection of the cover (10) with the roller (11), **characterised in that** the latching hook (22), in order to produce the latching connection, at least partially engages radially from outside inwards into the latch receiver (26), wherein the connection of the latching hook (22) with the latch receiver (26) is additionally secured by a flexible strand element that is at least partially wound up round the roller (11) and comes to lie on the latching hook (22), and the latch receiver (26) is arranged in the area of the outer peripheral surface (16), wherein in the area of the latch receiver (26) the outer peripheral surface (16) possesses a radially inwardly directed recess (30) for at least partially receiving a latch head (23) of the latching hook (22), and the at least partially wound up strand element presses the latch head (23) of the latching hook (22) radially inwards in the direction of the outer peripheral surface (16) or of the recess (30).

2. Animal restraining device according to claim 1, **characterised in that** the wound-up strand element presses the latching hook (22) radially from outwards inwards and/or the latch receiver (26) possesses a latch stop (28), wherein the latch head (23) preferably at least partially engages behind the last stop (28) in the latching connection and/or an outer surface (24) of the latch head (23) abuts at least partially on an inner surface (29) of the latch stop (28).

3. Animal restraining device according to claim 2, **characterised in that** the latch stop (28), in a projectional manner, is radially outwardly directed, wherein the latch stop (28) preferably possesses a first ramp (36), wherein the first ramp (36) is preferably arranged on a radially outwardly directed side of the latch stop (28) and/or the first ramp (36) has a downward slope towards an outer side of the roller (11), in particular in the direction of the cover (10).

4. Animal restraining device according to one of claims 2 or 3, **characterised in that** the latch head (23) has a second ramp (25), wherein the second ramp (25) is preferably arranged on a radially inwardly directed side of the latch head (23) and/or has a slope designed to correspond to the first ramp (36) so as to facilitate the insertion of the latching hook (22) into the latch receiver (26).

5. Animal restraining device according to one of the preceding claims, **characterised in that** as a result of a transverse, in particular right angled insertion movement of the cover (10) and/or of the latching hook (22) to the plane of the cover and/or to the radial orientation of the roller (11), the cover (10) is lockable with the roller (11) and/or the latching hook (22) is lockable with the latch receiver (26), wherein the latching hook (22) is designed in the form of a bar and/or is U-shaped and extends transversely, in particular at right angles, to the plane of the cover (10).

6. Animal restraining device according to one of the preceding claims, **characterised in that** the outer peripheral surface (16) for forming a winding space (19) is confined by means of two radially outwardly extending and annular fins (17, 18) that are spaced apart from one another, wherein the latch receiver (26) is preferably associated with one annular fin (18) and/or possesses an opening (27) through which the latching hook (22) can be at least partially conducted.

7. Animal restraining device according to one of the preceding claims, **characterised in that** the roller (11) has a cylinder element (13) that possesses an outer peripheral surface (16) and an inner space (14) that is sealable by means of the cover (10), in particular by a disc, wherein preferably one, two, three, four or more, in particular evenly distributed, latching connections are provided and/or the cover (10) in the latching connection ends flush with the outer side of the roller (11).

## Revendications

1. Moyen de maintien d'un animal, comprenant un dispositif d'enroulement à enrouler et dérouler un élément d'écheveau flexible moyennant un rouleau (11) à recevoir ledit élément d'écheveau sur une surface périphérique extérieure (16) et comprenant un couvercle (10) à fermer un espace intérieur (14) dudit rouleau (11), audit couvercle (10) et audit rouleau (11) étant apte à être relié l'un à l'autre moyennant un moyen d'encliquetage (12), dans lequel ledit couvercle (10) comprend au moins un crochet d'encliquetage apte à être encliqueté dans un récepteur d'encliquetage (26) dudit rouleau (11) afin d'établir une liaison d'encliquetage entre ledit couvercle (10) et ledit rouleau (11), **caractérisé en ce que** ledit crochet d'encliquetage (22) s'engage, au moins en partie, radialement dans ledit récepteur d'encliquetage (26) de l'extérieur vers l'intérieur pour l'établissement de ladite liaison d'encliquetage, la liaison dudit crochet d'encliquetage (22) avec ledit récepteur d'encliquetage (26) étant supplémentairement sécurisé, quand un élément d'écheveau flexible est enroulé, au moins en partie, autour ledit rouleau (11) et vient se situer sur ledit crochet d'encliquetage (22), et **en ce que** ledit récepteur d'encliquetage (26) est disposé dans la zone de ladite surface périphérique extérieure (16), à ladite surface périphérique extérieure (16) présentan, dans la zone dudit récepteur d'encliquetage (26), une cavité (30) orientée radialement vers l'intérieur pour la réception, au moins en partie, d'une tête d'encliquetage (23) dudit crochet d'encliquetage (22), et **en ce que** ledit élément d'écheveau enroulé, au moins en partie, presse ladite tête d'encliquetage (23) dudit crochet d'encliquetage (22) radialement vers l'intérieur en une direction de ladite surface périphérique extérieure (16) ou respectivement de ladite cavité (30).

2. Moyen de maintien d'un animal selon la revendication 1, **caractérisé en ce que** ledit élément d'écheveau presse ledit crochet d'encliquetage (22) radialement de l'extérieur vers l'intérieur et/ou ledit récepteur d'encliquetage (26) comprend une butée d'encliquetage (28), à ladite tête d'encliquetage (23) s'agrippant, de préférence, derrière ladite butée d'encliquetage (28) dans ladite liaison d'encliquetage, au moins en partie, et/ou à une surface extérieure (24) de ladite tête d'encliquetage (23) reposant, au moins en partie, contre une surface intérieure (29) de ladite butée d'encliquetage (28).

3. Moyen de maintien d'un animal selon la revendication 2, **caractérisé en ce que** ladite butée d'encliquetage (28) est orientée radialement vers l'extérieur sous forme d'une saillie, à ladite butée d'encliquetage (28) présentant, de préférence, une première rampe (36) et à ladite première rampe (36) étant disposée, de préférence, à un côte de ladite butée d'encliquetage (28), qui est radialement orienté vers l'extérieur, et/ou à ladite première rampe (36) ayant une inclinaison descendante vers un côté extérieur dudit rouleau (11), en particulier en une direction vers ledit couvercle (10).

4. Moyen de maintien d'un animal selon une quelconque des revendications 2 ou 3, **caractérisé en ce que** ladite tête d'encliquetage (23) présente une deuxième rampe (25), à ladite deuxième rampe (25) étant disposée, de préférence, à un côté de ladite tête d'encliquetage (23), qui est radialement orienté vers l'intérieur, et/ou ayant une inclinaison formée en correspondance avec ladite première rampe (36) afin de faciliter l'introduction dudit crochet d'encliquetage (22) dans ledit récepteur d'encliquetage (26).

5. Moyen de maintien d'un animal selon une quelconque des revendications précédentes, **caractérisé en ce que** ledit couvercle (10) est apte à être encliqueté dans ledit rouleau (11) et/ou **en ce que** ledit crochet d'encliquetage (22) est apte à être encliqueté dans ledit récepteur d'encliquetage (26) en vertu d'un mouvement d'insertion dudit couvercle (10), et/ou **en ce que** ledit crochet d'encliquetage (22) est apte à être encliqueté en travers, en particulier à un angle droit, par rapport au plan dudit couvercle (10) et/ou à l'orientation radiale dudit rouleau (11), audit crochet d'encliquetage (22) étant configuré, de préférence, sous forme d'une traverse et/ou en U et s'étendant en travers, en particulier à un angle droit, par rapport au plan dudit couvercle (10).

6. Moyen de maintien d'un animal selon une quelconque des revendications précédentes, **caractérisé en ce que** ladite surface périphérique extérieure (16) est limitée moyennant deux traverses annulaires (17, 18), qu i s'étendent radialement vers l'extérieur et qui sont écartées l'une de l'autre en constituant un espace d'enroulement (19), audit récepteur d'encliquetage (26) étant affecté, de préférence, à une traverse annulaire (18) et/ou présentant une percée (27) pour le passage, au moins en partie, dudit crochet d'encliquetage (22).

7. Moyen de maintien d'un animal selon une quelconque des revendications précédentes, **caractérisé en ce que** ledit rouleau (11) comprend un élément cylindrique (13), qui présente une surface périphérique extérieure (16) et un espace intérieur (14), qui est apte à être fermé moyennant ledit couvercle (10), en particulier une disque, à un, deux, trois, quatre ou plus liaisons d'encliquetage étant disposées, en particulier en répartition uniforme, et/ou audit couvercle (10) étant délimité, de façon affleurée avec le côté extérieur dudit rouleau (11), dans ladite liaison d'encliquetage.
